# EUROPEAN PATENT SPECIFICATION

(11) **EP 0 438 024 B1**
(45) Date of publication and mention of the grant of the patent: **20.04.1994**
(21) Application number: 90610080.5
(22) Date of filing: 21.12.1990
(51) Int. Cl.: A01K 5/02

(54) **Dispenser for concentrates and use hereof**
Konzentratspender und dessen Anwendung
Distributeur de concentrés et son usage

(30) Priority: 18.01.1990 DK 150/90
(43) Date of publication of application: 24.07.1991
(73) Proprietor: SKIOLD MULLERUP A/S, DK-5540 Ullerslev (DK)
(72) Inventor: Nielsen, Peter, DK-6270 Tonder (DK)
(74) Representative: Lund, Preben

(56) References cited:
- EP-A- 0 044 465
- CA-A- 1 010 730
- GB-A- 898 817

## Description

The invention relates to a dispenser for concentrates of the kind described in the preamble of claim 1.

Dispensers of this kind are used extensively for feeding animals ad libitum, in that the animals themselves operate the delivery device and receive feed in the trough as required. However, some animals, like for example calves, fill their muzzles with feed and then lift their heads away from the trough to eat the feed. In this connection it is well-known that some feed is spilt on the floor, since for example calves have a tendency to fill their muzzles as much as possible before they eat. The feed which is spilt on the floor will usually be lost, especially if the floor is grated.

From Canadian patent no. 1,010,730 is known a dispenser for concentrates having a single feed container for one type of feed. The dispenser has no regulator for the delivery of feed which can cause a considerable waste, because the trough is full all the time.

From British patent no. GB-A-898 817 is know a feed dispenser with division plates, but these hang vertically, being pivoted at their upper ends, and thus swing inwardly under the pressure of the feed.

From European patent application no. 81105307.3 (EP-A-0,044,465) is known a dispenser for concentrates likewise with a single feed container for one type of feed or one mixture of feed. The delivery device comprises a vane wheel to be operated by the animal when it wants feed. It is hereby avoided that more feed is filled into the trough than the animal will eat.

It is the object of the invention to present a mixing dispenser for concentrates by which different kinds of feed are mixed automatically.

By designing the dispenser for concentrates according to the invention as presented and characterized in claim 1, it is achieved that different kinds of feed are mixed automatically. The mixing takes place gradually as the feed is eaten by the animals. This arrangement is very labour saving and provides the possibility of preparing fully individual feed mixtures, even if the dispenser is replenished automatically by means of a feed conveying plant.

The animals stand for example two and two, muzzle to muzzle, eating. They cannot lift their heads while eating and thereby spill the feed, but remain standing, heads in the trough, eating a little at a time. The trough is preferably placed outside the pen and in such a manner that the animals have to put their heads out between the bars to reach the trough. Should the animals spill feed after all, this will remain in the feed alley and not be lost.

By designing the dispenser as characterized in claim 2, a simple and effective dispenser for many purposes is achieved. Two animals can eat at the dispenser at the same time without bothering each other. The comparatively small trough ensures good utilization of the feed without waste, since the animals will usually eat the feed as soon as it covers the bottom of the trough.

By designing the dispenser for concentrates according to the invention as presented and characterized in claim 3, it is ensured that the dispenser's feed container is emptied efficiently, so that all feed and with that all feed components are certain to be delivered. This design moreover ensures that the animals at the dispenser are standing in such a manner that they do not bother each other. This results in more peace and less stress in the byre, which increases the daily growth.

By designing the dispenser for concentrates according to the invention as presented and characterized in claim 4, efficient feed delivery is achieved when the animals turn the vane wheel. When they eat from the trough they push the vane wheel, whereby fresh feed is pushed forward. The feed in the trough is mixed with fresh feed all the time, whereby old feed which the animals may not want to eat later is prevented from piling up in the trough.

By designing the dispenser for concentrates according to the invention as presented and characterized in claim 5, the trough bottom is certain to be kept clean, since feed leavings are scraped loose, which prevents any moist feed from sticking to the bottom of the trough.

By designing the dispenser for concentrates according to the invention as presented and characterized in claim 6, the trough becomes fully self-purifying, which is very expedient in respect of the feed hygiene.

The dispenser for concentrates according to the invention is preferably developed for feeding calves in pens, as presented in claim 7, but may naturally be applied for the feeding of other animals. It will be easier for the animals to eat without standing in each other's way, which is important when feeding ad libitum. Moreover, it is easier to fill the dispenser from the feed alley, and in reality the pen area is increased in that the whole dispenser including the trough is placed outside the pen area proper, i.e. suspended on the outside of the front of the pen.

The invention will hereafter be explained in further detail with reference to the drawing showing and explaining a preferred embodiment of the dispenser, in that
- fig. 1: is a perspective view of the dispenser according to the invention seen from the feed alley and with two calves eating from the trough,
- fig. 2: is a partly transparent and partly sectional view of the dispenser in fig. 1,
- fig. 3: is a partly transparent side view of the dispenser in fig. 2, and
- fig. 4A-C: are three section drafts showing the delivery principle of the dispenser.

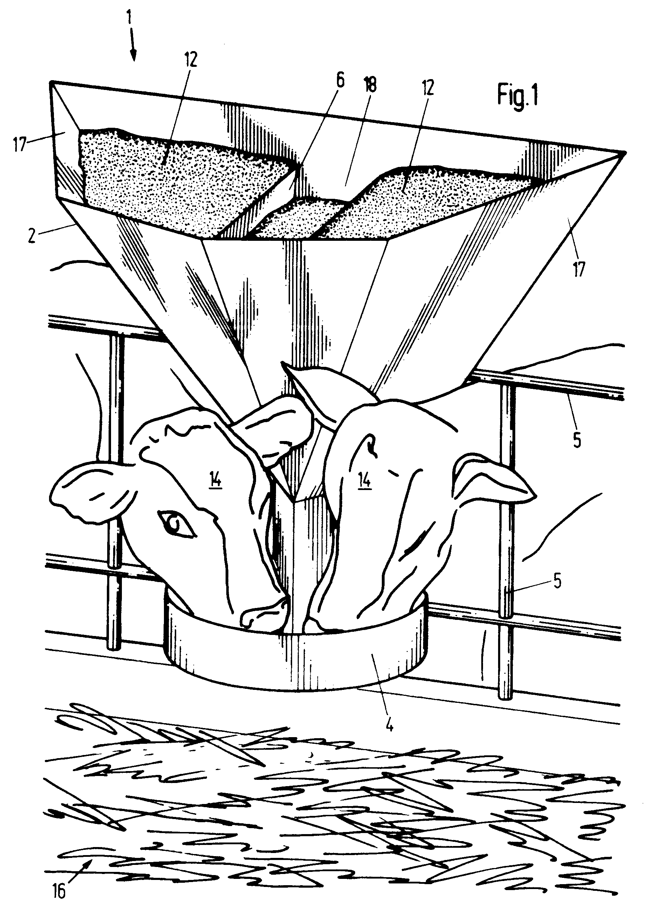

Fig. 1 of the drawing shows the dispenser 1 according to the invention placed on the outside of the front 5 of the pen in such a manner that the whole dispenser including feed container 2 and trough 4 projects into the area 16 which is a feed alley.

The eating positions are arranged in such a manner that the calves 14 eat muzzle to muzzle, thereby providing enough room for two calves to eat simultaneously from a comparatively small trough. It is hereby ensured that the bottom of the trough 4 is fully utilized and kept clean by the calves.

The feed container 2 comprises a plane back wall 18 to which all the parts are secured. The back wall is provided with fittings or the like (not shown) in order for the dispenser to be solidly secured to the bars 5 of the front of the pen. The container 2 is funnel-shaped and has inclined side walls 17 which moreover are placed in such a manner that they form an angle of less than 90° to the back wall 18 in order for the calves 14 to stand at an oblique angle to each other as shown, so that their hind parts do not touch. The shape and inclination of the side walls 17 and the size of the trough 4 force the calves to eat directly from the trough, since they cannot lift their heads because of the shape of the container 2. This effect may be increased by means of the bars 5 of the front of the pen, cf. fig. 1, so that the animals have to put their heads out between the bars in order to reach the trough.

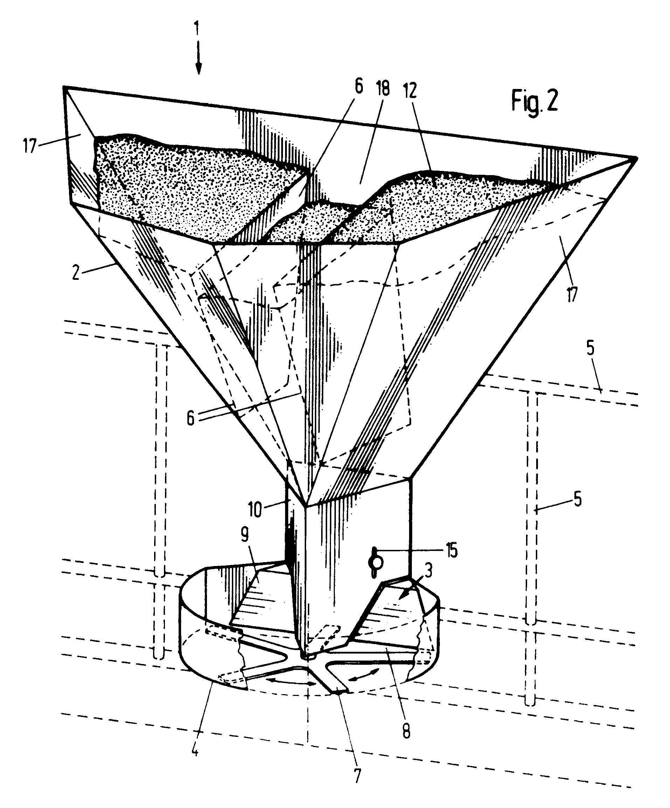

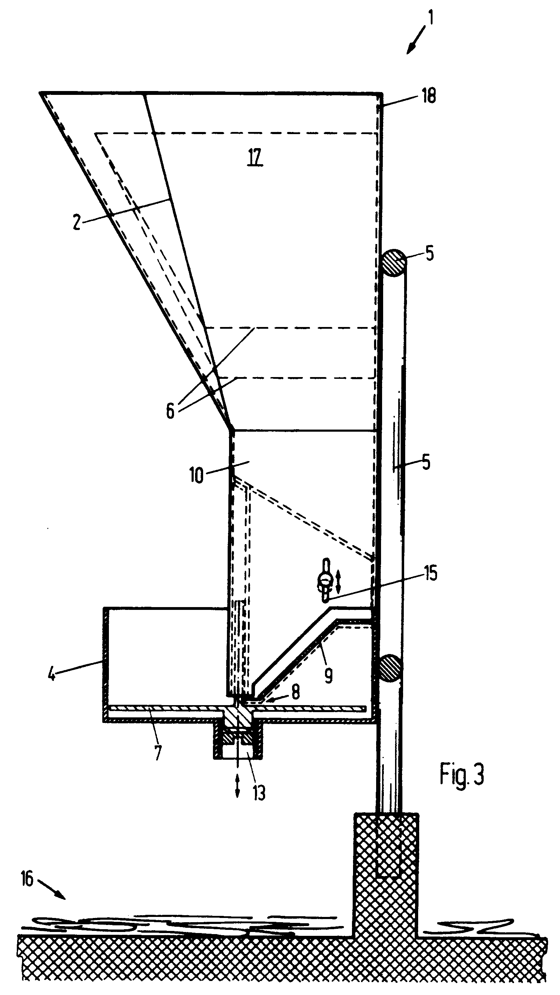

Figs. 2 and 3 show in more detail how the dispenser 1 is arranged. The funnel-shaped part of the feed container 2 ends in a chutelike area 10 which in turn ends in a delivery device 3 comprising a slot 8 at each side of the trough 4 and a rotatable vane wheel 7 in the bottom of the trough, which vane wheel extends through the slot 8 as shown. With the screws 15 the covering plates 9 may be raised and lowered in order to adjust the size of the slot 8.

Underneath the trough 4 there are bearing means and adjustment means 13 for the vane wheel 7 which thereby is adjustable as to height, so that the distance of the wheel 7 to the bottom of the trough 4 may be adjusted. The adjustment means 13 and 15 are applied for adapting the dispenser to the actual type of feed in order that the leavings in the trough are the least possible at all times.

From the drawing it is evident that the trough 4 is considerably smaller than the top of the feed container 2, and that the trough has a size which leaves just enough room for a calf at each side. The calf turns the vane wheel 7, whereby fresh feed is pushed out into the trough until the vane wheel 7 is covered. Then the calf eats the feed.

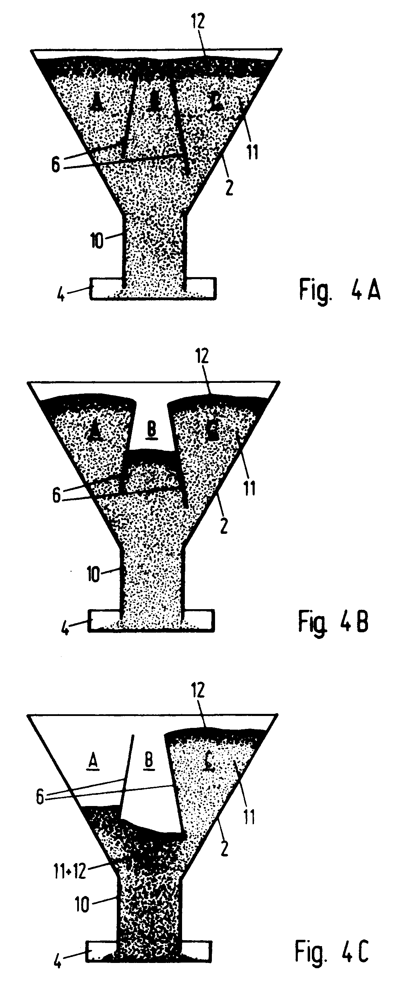

Inside the feed container 2 there is shown two division plates 6 with different sizes which divide the feed container into three areas, the function of which is explained in more detail with reference to figs. 4A-C of the drawing.

Figs. 4A-C show that the division plates 6 do not reach all the way down to the chute area 10, and the figures moreover show that the size of the plates differ longitudinally, in that the plate 6 on the left is shorter than the plate 6 on the right.

Hereby three areas are formed; a reversed funnel-shaped area B between two funnel-shaped areas A and C.

If the container is filled with ordinary concentrates 11 as shown in fig. 4A, another type of feed, for example a mixture containing protein and/or mineral 12, may be applied at the top. When the calves eat the feed from the trough 4 and push more feed forward by means of the vane wheel, the feed container is emptied as shown in figs. 4B and 4C. The central area B is emptied first, allowing the two feed substances to become partially mixed while the level is sinking, cf. fig. 4B. Not until the level in the area B reaches the lower edge of the left-hand plate 6 does the emptying of the area A begin, cf. fig. 4C. Not until the areas A and B are emptied, and the level in these areas is below the right-hand division plate 6, will the emptying of the area C begin. Simultaneously with the emptying of the areas the two feed substances will become mixed. Tests have established that the two feed substances become well-mixed and that the feed supplement is never delivered without being heavily mixed with the concentrates 11.

## Claims

1. A dispenser for concentrates for animals comprising a container (2) for tricklable feed and having a downward-facing part (10) comprising a feed delivery device (3) and at least one trough (4), all built together to form a unit and arranged to be secured to the bars (5) of a pen, and in such a manner that the trough is placed at a lower level than the feed container, that the feed container (2) is funnel-like with inclined walls extending outwards and upwards, which walls at the bottom form a chute (10) which opens into the trough, that the dispenser as a whole is designed in such a manner that at each side there is only room for one animal to eat at a time, that the trough (4) is placed in such a manner that an animal can only eat by placing its head underneath the inclined side wall (17) of the container and beside the chute (10), and that the trough is placed or has such a size that from the point where the animals stand its outer edge is substantially within an area limited by the widest breadth of the feed container, **characterized** in that the container (2) is divided into more than one area by means of internal inclined division plates (6) which do not reach all the way down to the intermediate area between the funnel-shaped part of the container and the chute (10).

2. A dispenser for concentrates according to claim 1, **characterized** in the application of two division plates (6) at different distances from the intermediate area, and in that upwards the two division plates incline towards each other, so that two funnel-shaped areas (A, C) appear which are separated by a central reversed funnel-shaped area (B).

3. A dispenser for concentrates according to claim 1 or 2, **characterized** in that the inclined walls (17) of the container (2) extend from a substantially plane wall (18) to which each wall (17) forms an angle of less than 90°.

4. A dispenser for concentrates according to any one of the claims 1-3, **characterized** in that the feed delivery device (3) comprises a vane wheel (7) which is rotatable around a substantially vertical axis, and placed in such a manner that a part of the vane wheel may reach into the chute (10) below the funnel-shaped part of the feed container via a slot (8) whose size may be adjustable.

5. A dispenser for concentrates according to claim 4, **characterized** in that the vane wheel (7) is designed and placed in such a manner that when rotated it sweeps substantially all of the bottom area in the trough.

6. A dispenser for concentrates according to claim 4 or 5, **characterized** in that the vane wheel (7) is provided immediately over the bottom of the trough.

7. Use of the dispenser for concentrates according to any one of the claims 1-6 for the fattening of beef calves in pens, for example pens with a grated floor, and where the dispenser is arranged to be secured to the bars of a pen and placed on the outside of the pen.

## Patentansprüche

1. Konzentratspender für Tiere, der einen Behälter (2) für rieselfähiges Futter umfaßt und einen nach unten gewandten Teil (10) aufweist, der eine Futterabgabevorrichtung (3) und wenigstens einen Trog (4) umfaßt, wobei alle Teile zu einer Einheit zusammengebaut sind und so an den Stäben (5) einer Bucht angebracht werden, daß der Trog niedriger angeordnet ist als der Futterbehälter, daß der Futterbehälter (2) trichterartig ist, wobei geneigte Wände nach außen und nach oben verlaufen, und die Wände an der Unterseite eine Schütte (10) bilden, die sich in den Trog öffnet, daß der Spender als Ganzes so konstruiert ist, daß an jeder Seite jeweils nur für ein Tier Platz ist, daß der Trog (4) so angeordnet ist, daß ein Tier nur fressen kann, indem es seinen Kopf unter die geneigte Seitenwand (17) des Behälters und neben die Schütte (10) hält, und daß der Trog so angeordnet ist oder eine derartige Größe hat, daß sich sein äußerer Rand von dem Punkt aus, an dem die Tiere stehen, im wesentlichen in einem Bereich befindet, der durch die größte Breite des Futterbehälters begrenzt wird, **dadurch ge****kennzeichnet,** daß der Behälter (2) mittels innerer geneigter Trennplatten (6), die nicht bis in den Zwischenbereich zwischen dem trichterförmigen Teil des Behälters und der Schütte (10) hinunterreichen, in mehr als einen Bereich unterteilt ist.

2. Konzentratspender nach Anspruch 1, **gekennzeichnet** **durch** die Anbringung von zwei Trennplatten (6) in unterschiedlichem Abstand zu dem Zwischenbereich, und dadurch, daß die beiden Trennplatten nach oben zu zueinander geneigt sind, so daß zwei trichterförmige Bereiche (A, C) entstehen, die durch einen mittleren, umgekehrt trichterförmigen Bereich (B) voneinander getrennt sind.

3. Konzentratspender nach Anspruch 1 oder 2, **dadurch ge****kennzeichnet,** daß sich die geneigten Wände (17) des Behälters (2) von einer im wesentlichen planen Wand (18) erstrecken, zu der jede Wand (17) einen Winkel von weniger als 90° bildet.

4. Konzentratspender nach einem der Ansprüche 1 bis 3, **dadurch gekennzeichnet,** daß die Futterabgabevorrichtung (3) ein Flügelrad (7) umfaßt, das sich um eine im wesentlichen vertikale Achse dreht und so angebracht ist, daß ein Teil des Flügelrads über einen Schlitz (8), dessen Größe verstellbar sein kann, unterhalb des trichterförmigen Teils des Futterbehälters in die Schütte (10) reichen kann.

5. Konzentratspender nach Anspruch 4, **dadurch gekenn****zeichnet,** daß das Flügelrad (7) so konstruiert und angeordnet ist, daß es im wesentlichen die gesamte Bodenfläche in dem Trog überstreicht, wenn es gedreht wird.

6. Konzentratspender nach Anspruch 4 oder 5, **dadurch ge****kennzeichnet,** daß sich das Flügelrad (7) direkt über dem Boden des Troges befindet.

7. Einsatz des Konzentratspenders nach einem der Ansprüche 1 bis 6 zum Mästen von Rinderkälbern in Buchten, beispielsweise in Buchten mit einem Bodenrost, wobei der Spender an den Stäben einer Bucht angebracht ist und sich an der Außenseite der Bucht befindet.

## Revendications

1. Distributeur de concentrés pour animaux comportant un réservoir (2) pour de la nourriture susceptible de s'écouler et ayant une partie dirigée vers l'arrière (10) comportant un dispositif de fourniture de nourriture (3) et au moins une mangeoire (4), tous ces éléments étant construits les uns avec les autres pour constituer une unité et étant disposés pour être fixés aux barreaux (5) d'un parc, et d'une façon telle que la mangeoire se trouve placée à un niveau inférieur à celui du réservoir de nourriture, que le réservoir de nourriture (2) est en forme d'entonnoir avec des parois inclinées s'étendant vers l'extérieur et vers le haut, lesquelles parois constituent à leur base un couloir d'alimentation (10) qui débouche dans la mangeoire, que le distributeur dans son ensemble est conçu d'une façon telle, que de chaque côté de celui-ci, il n'existe de place que pour un seul animal mangeant au même moment, que la mangeoire (4) est placée de telle façon qu'un animal ne puisse manger qu'en plaçant sa tête en dessous de la paroi inclinée latérale (17) du réservoir et en dessous du couloir d'alimentation (10) et que la mangeoire est placée ou a une dimension telle qu'à partir du point où les animaux se trouvent, son bord extérieur est sensiblement dans une zone délimitée par la plus grande largeur du réservoir de nourriture, caractérisé en ce que le réservoir (2) est divisé en plusieurs zones au moyen de plaques de division inclinées internes (6) qui n'atteignent pas vers le bas la zone intermédiaire entre la partie en forme d'entonnoir du réservoir et le couloir d'alimentation (10).

2. Distributeur de concentrés selon la revendication 1, caractérisé en ce qu'il est prévu l'application de deux plaques de division (6) à des distances différentes à partir de la zone intermédiaire et en ce que, vers le haut, les deux plaques de division sont inclinées l'une vers l'autre de telle sorte que deux zones en forme d'entonnoir (A, C) apparaissent, lesquelles sont séparées par une zone en forme d'entonnoir central inversé (B).

3. Distributeur de concentrés selon la revendication 1 ou la revendication 2, caractérisé en ce que les parois inclinées (17) du réservoir (2) se prolongent à partir d'une paroi sensiblement plane (18) avec laquelle chaque paroi (17) forme un angle de moins de 90°.

4. Distributeur de concentrés selon l'une quelconque des revendications 1 à 3, caractérisé en ce que le dispositif de distribution de nourriture (3) comporte une roue à ailettes (7) qui est susceptible de tourner autour d'un axe sensiblement vertical et est placée de telle sorte qu'une partie de la roue à ailettes puisse pénétrer dans le couloir d'alimentation (10) en dessous de la partie en forme d'entonnoir du réservoir de nourriture par l'intermédiaire d'une fente (8) dont la dimension peut être réglable.

5. Distributeur de concentrés selon la revendication 4, caractérisé en ce que la roue à ailettes (7) est prévue et placée d'une façon telle que lorsqu'elle tourne, elle balaye sensiblement tout ce qui se trouve sur la zone du fond de la mangeoire.

6. Distributeur de concentrés selon la revendication 4 ou la revendication 5, caractérisé en ce que la roue à ailettes (7) est disposée immédiatement au-dessus du fond de la mangeoire.

7. Utilisation du distributeur de concentrés selon l'une quelconque des revendications 1 à 6, pour engraisser des veaux dans des parcs, par exemple des parcs dont le sol est à claire-voie et où le distributeur est disposé pour être fixé aux barreaux d'un parc et placé à l'extérieur du parc.
